# EUROPEAN PATENT SPECIFICATION

(11) **EP 1 983 311 B1**
(45) Date of publication and mention of the grant of the patent: **07.10.2020**
(21) Application number: 08103536.2
(22) Date of filing: 15.04.2008
(51) Int. Cl.: G01F 1/66, G01F 15/14, G01F 15/00

(54) **A Consumption Meter with Embedded Components**
Verbrauchsmesser mit eingebetteten Komponenten
Compteur de consommation doté de composants intégrés

(30) Priority: 17.04.2007 DK 200700560
(43) Date of publication of application: 22.10.2008
(73) Proprietor: KAMSTRUP A/S, 8660 Skanderborg (DK)
(72) Inventor: Drachmann, Jens, 8260 Viby J (DK)
(74) Representative: Plougmann Vingtoft a/s

(56) References cited:
- WO-A1-2006/045770
- WO-A2-00/73743
- WO-A2-2007/008692
- GB-A- 2 429 061
- JP-A- 2004 156 954
- US-A- 5 184 064
- US-B1- 6 954 144

## Description

### FIELD OF THE INVENTION

The present invention relates to a consumption meter for measuring a quantity value.

### BACKGROUND OF THE INVENTION

A consumption meter converts a measured quantity value to a consumed quantity. As an example, an ultrasonic flow meter may measure a time delay between counter-propagating ultrasonic waves in a medium flow, in order to determine a corresponding consumption of the medium, such as a consumption of hot or cold water.

A consumption meter is typically an advanced piece of equipment which may comprise delicate electronic equipment as well as delicate mechanical equipment in order to accurately determine the consumed quantity.

In some applications, the consumption meter needs to operate in potentially harmful conditions, such as conditions where it may be exposed to water, moist, particle dust or other potentially harmful material. For example it may need to be able to operate while submerged in water, either permanently or for shorter or longer periods, e.g. due to flooding. In other situations, it may be exposed to condense water or penetration of dust.

A known way of rendering consumption meters robust to penetration of water and dust is to provide a hermetically sealed casing for sealing off the internal parts of the meter. However, hermetically sealed casings are often costly to mount, and typically include parts, such as gaskets, fittings, etc. that also adds to the cost of the meter. Moreover, such devices may be difficult to operate, due to limitations set by the hermetically sealed casing.

WO 00/73743 discloses a modular utility meter, such as a water meter. The document discloses to partly encapsulate selected elements in polyurethane resin.

WO 2007/008692 discloses a flow controller that may be connected in-line within a chemically corrosive fluid flow circuit. The document discloses to use poured epoxy potting for encapsulating components inside a housing together with vent tubes for allowing passage of an exterior atmosphere to some of the components.

GB 2 429 061 A discloses a consumption meter, such as a water meter. The document discloses the use of ultrasonic transducers attached to an external surface of a plastic pipe, each transducer being covered by a respective cap and sealed from water ingress.

Hence, an improved consumption meter would be advantageous, and in particular it would be advantageous to provide a consumption meter which is capable of operating in a wet, moist or dusty environment, which is still cost efficient and user-friendly to operate.

### SUMMARY OF THE INVENTION

In particular, it may be seen as an object of the present invention to provide a consumption meter that is robust to operating in a wet, moist or dusty environment, which is still cost efficient, simple to fabricate and supports user-friendly operation. It is a further object of the present invention to provide an alternative to the prior art.

Thus, the above-described object and several other objects are intended to be obtained in a first aspect of the invention by providing a consumption meter according to claim 1.

By embedding the measuring means, the electronic circuit, the antenna and the power supply, a consumption meter may be provided which in a simple way seal off electrical elements from any potentially harmful elements, such as water, moist or dust. Especially a consumption meter is provided which may operate under water, which is not influenced by condense water, which is not affected by dust, etc. Moreover, no special requirements may be present for the casing in order to ensure the sealing of the electric elements. A robust consumption meter which may be operated in a potentially harmful environment may thereby provided in a manner which is simple and cost-efficient to fabricate, to store, to handle during installation and to maintain during operation.

The elements of the embedding unit are encapsulated by the embedding material. Consequently, either the consumption meter should not apply moving parts or any moving parts should be shielded from the embedding material. A number of consumption meters do not rely upon moving parts, such as consumption meters of the ultrasonic type. However, even for consumption meters with moving parts, if the moving parts can be shielded from the embedding material, most if not all advantages of the embodiments of the present invention are maintained.

Naturally, encapsulated elements are not easily removed or interchanged, however the invention is at least partly based on the insight that for at least some applications, the expected life-span for the consumption meter is so long that an interchanging of the entire consumption meter is more advantageous than to interchange specific elements of the consumption meter, since it is more cost-efficient with respect to fabrication, storage as well as the time it takes to replace the entire consumption meter as compared to repairing the meter.

The embedding material may in an advantageous embodiment be a hydrophobic material. While the encapsulation of the above-mentioned elements in the embedding material already provides a sealing of the elements, a hydrophobic embedding material may add to the sealing effect as well as to the robustness of the embedding unit. By using a hydrophobic material, the sealing effect of the embedding unit may be robust to even deep scratches and cuts, since the water is repelled from the cuts and pressed out of the cut.

The embedding material may in an advantageous embodiment be a water impermeable material. In situations where the consumption meter is to be submerged for longer periods of time or by other means exposed to water for an extended period of time, water is thereby inhibited to penetrate the embedding material.

The embedding material may in an advantageous embodiment be at least partly transparent, such having a transparency between 25% and 100%. Depending on specific design choices and material choices, a specific transparency may be chosen or used. At least in application implying a display or other means of optical communication, it may be advantageous to ensure a high transparency, such as a transparency higher than 50%, such as 75%, such as 85%, such as 95%. The transparency may be in one or more regions of the optical electromagnetic spectrum, and should be construed to include transparency in one or more regions of visible light or near visible light, ultraviolet (UV) light and/or infrared (IR) light. In general, light may be construed as electro-magnetic radiation in the visible or near-visible wavelength range of 350 nm to 800 nm, as well as UV-light or near UV-light in the wavelength range down to approximately of 200 nm, and IR-light or near IR-light in the wavelength range up to approximately 1,5 micrometers.

The embedding material may in advantageous embodiments be solid or viscous. The specific softness of the embedding material may depend upon the specific choice of material. It may however be advantageous to use a material which is resilient. Especially since a consumption meter may be subdued to different temperatures and large temperature gradients, it may be advantageous to use a material with sufficient resiliency so that wires and other components are not torn off when the material expand or contract upon temperature changes. Moreover, a resilient material may facilitate push-buttons, etc. The embedding material, may in connection with the fabrication apply embedding material in liquid or fluid form, which subsequently is hardened to bring the embedding material into solid or viscous form. In embodiments, a solid embedding material may be applied, or at least a viscous embedding material which is sufficiently viscous so that it will not leak from small holes or openings in the casing. A hole or opening in the casing, either due to an accidental breach or provided in the casing intentionally, will not cause the embedding material to leak out.

In different embodiments, the embedding material may be in the form of a gel, an elastomer, a resin, or other forms.

In an advantageous embodiment, the embedding material may comprise or may be based on polymerized siloxanes also known as polysiloxanes and silicone. An embedding material comprising silicone or being based on silicone may fulfil a large number of advantageous features, such as it may be hydrophobic, it may be provided in a large variety of transparencies, and it may be provided in a large variety of resiliencies.

In an advantageous embodiment, the embedding material may comprise a polymer material. A large number of different polymer materials are available, with a large variety in material properties, so that depending upon the specific intended application, a suitable polymer material may be found.

In an advantageous embodiment, the embedding material may comprise a filler material. A filler material, such as glass powder or other powders or particulate materials may be mixed into the embedding material. Depending on the embedding material and the filler material, the properties of the embedding material mixed with a filler material may remain substantially unchanged, but the cost of filler material is typically lower than the cost of pure embedding material, and the overall cost may thereby be lowered.

In an advantageous embodiment, the embedding material may comprise a material for inhibiting organic growth. Since the consumption meter may be placed in wet or moist location, the surface of the embedding material may be prone to organic growth. While organic growth may not influence the operability of the consumption meter. Organic growth may nevertheless be unwanted for visual reasons or hygienic reasons.

In an advantageous embodiment, the embedding material may comprise a dye. A dye may be provided in order to tune the optical properties of the embedding material.

The consumption meter comprises an antenna suitable for emitting and receiving signals. In a specific embodiment, an antenna may be provided on a printed circuit board (PCB).

In an advantageous embodiment, the embedding material may be a non-conductive material or dielectric material, so that the embedding material may be disposed directly on top of the electrical components. An additional advantage which may be achieved by application of a dielectric material is that a shorter and more compact antenna may be applied, thereby facilitating a more compact consumption meter.

The elements of the embedding unit are encapsulated by the embedding material. Embodiments may thereby be provided in which the encapsulation of the electrical elements includes an encapsulation of an antenna. An advantage which may be achieved thereby is that the electrical elements may be placed in fixed known positions. Advantageous embodiments may thereby be provided where the position of the electrical elements and the design of the antenna may be optimized with respect to each other. Additionally, the position of the electrical elements and the design of the antenna may be optimized to an intended placing of the consumption meter. For example, if the consumption meter is intended to be operated while submerged in water, this aspect may be included in the optimization of the position of the electrical elements and the design of the antenna.

Additional advantages of embodiments of the present invention include providing a tamper proof consumption meter. A consumption meter is normally sealed, so that only authorized persons may access the inside of the casing. Seals typically require attachment means which adds to the production cost of the casing. By forming an embedded unit, the various elements of the consumption meter are not accessible, so that no dedicated sealing means may be necessary on the casing. Instead, the casing itself may be used as a seal.

In order to improve the sealing of the consumption meter, the embedding material may be adhesive or at least the surface of the embedding unit or an inner surface of the casing may be provided with an adhesive material. The casing thereby adheres to the embedding unit, so that the casing may not be removed without damaging the casing. By providing the casing in a plastic material, the casing will be damaged upon trying to remove the casing, in a way so that a breaking of the seal can be detected. To further improve the sealing, or as an alternative to other sealing means, the casing may be provided with at least one anchor structure. The anchor structure may clutch into the embedding unit, to impede an unauthorized removal of the casing.

A further advantage of embodiments of the present invention is that a stiff object, such as connector pin, may be inserted into the embedding unit for obtaining electrical contact from the outside to the embedded electronics. Upon removal of the object, embedding material may close off the cut made by the insertion of the pin.

In a further advantage of embodiments of the present invention, for an adhesive embedding material a cut made by an insertion of a pin or other stiff object may upon removal of the object, adhere together again without damaging the sealing effect of the encapsulation. For an adhesive hydrophobic material, the sealing effect of the encapsulation is improved even further.

In advantageous embodiments, the embedding material may further encapsulate a number of components including, but not being limited to: a display, the display being operatively connected to the electronic circuit; an optical communication unit, the optical communication unit being operatively connected to the electronic unit; or a plug for electrical connection, the plug being operatively connected to the electronic unit; or a push-button.

### BRIEF DESCRIPTION OF THE FIGURES

Embodiments of the invention will be described, by way of example only, with reference to the Figures, in which
FIG. 1 illustrates in a first schematic perspective view elements of a consumption meter;
FIG. 2 illustrates in a second schematic perspective view elements of a consumption meter;
FIG. 3 shows a schematic cross-section of a front view of a consumption meter;
FIG. 4 illustrates in a schematic perspective view a consumption meter in the form of a complete unit;
FIG. 5A illustrates in a schematic perspective view an electronic circuit of the consumption meter provided with a number of components enabling an interfacing to the meter.
FIGS. 5B-D illustrate in cross-sectional schematic views aspects of FIG. 5A; and
FIG. 6 schematically illustrates an embodiment of a production step when fabricating the carrier PCBs.

### DESCRIPTION OF EMBODIMENTS

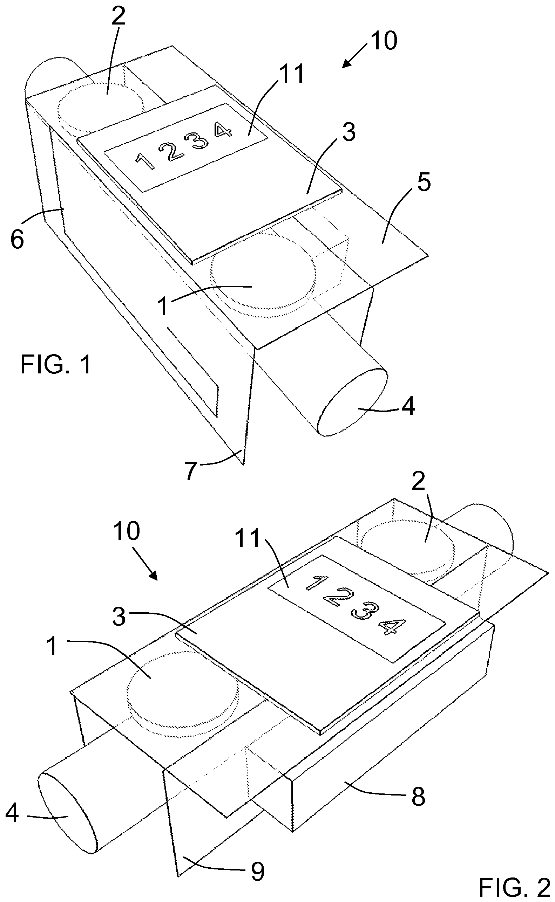

FIGS. 1 to 3 illustrate in schematic form different aspects of an embodiment of elements of a consumption meter 10, 30 in accordance with the present invention.

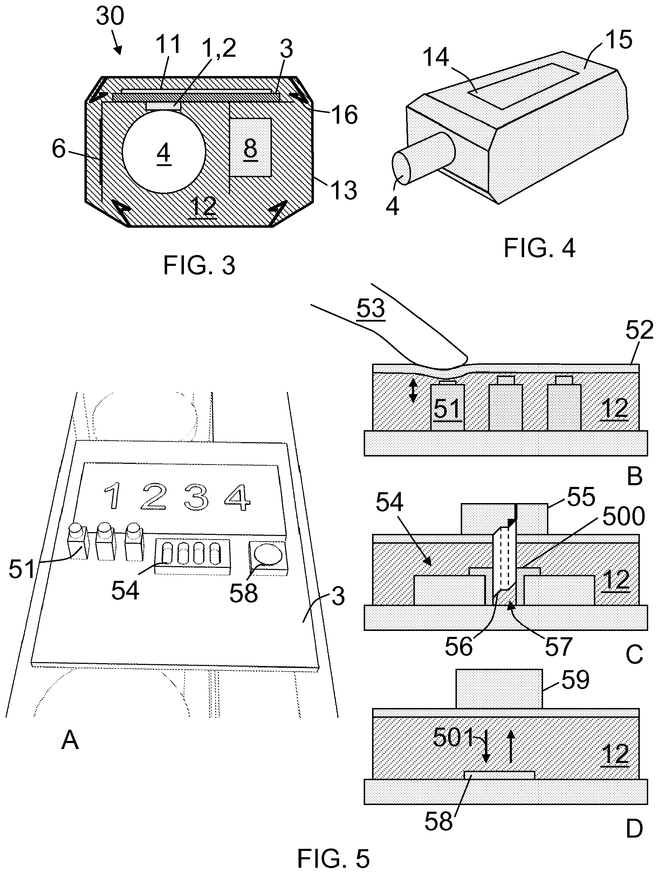

FIGS. 1 and 2 show elements of a consumption meter 10 as seen from two different perspective views, whereas FIG. 3 shows a schematic cross-section 30 of a front view of a consumption meter. The consumption meter as illustrated in the FIGS. 1 to 3 is in the form of an ultrasonic flow meter.

The working principle of an ultrasonic flow meter is well known to the skilled person, and will not be elucidated upon in detail here. The flow meter comprises a flow passage 4 schematically illustrated by an axial tube. Ultrasonic transducers 1, 2 for generating and detecting ultrasonic signals are placed so that the generated signals can be introduced into the measuring section. The ultrasonic transducers are schematically illustrated as discs. Reflectors (not shown) are placed inside the flow passage, so that the signals emitted from the transducers are directed in opposite directions along the flow passage, and directed onto the opposite transducer for detection.

In a typical determination of a fluid flow, ultrasonic signals are simultaneously emitted from the two ultrasonic transducers. Signals propagating upstream propagate faster than signals propagating downstream, and the flow rate can be determined by measuring difference in arrival time of the emitted signals at the other transducers. The determination of the flow rate, as well as the outputting of the flow rate may be done by an analogue or digital unit 3 electrically connected to the transducers.

Embodiments of the consumption meter in accordance with the present invention comprise measuring means for measuring the quantity value. For an ultrasonic flow meter, the measuring means includes the ultrasonic transducers 1, 2 as well as any means for determining the difference in arrival time of the emitted signals, and any means for converting and outputting the measured quantities to a consumed quantity value. Such means are typically in the form of an integrated electronic circuit 3 implemented on a PCB.

The electronic circuit 3 also comprises components for operating the consumption meter. The electronic circuit is supported by a plate, typically a PCB 5, this PCB is also referred to as the top PCB. The electronic circuit 3 illustrated on FIG. 1 and 2 does not show any specific electrical components, except for a display 11, however it is clear to the skilled person that such components are present. Moreover, the integrated electronic circuit 3 is schematically illustrated as a single unit attached to the PCB 5. However, it is to be understood that this representation is only for the purpose of illustration. Typically, the components of the electronic circuit 3 would be provided directly on the PCB 5. As an example, the illustration of the display 11, should not be construed as if the display is attached to a single unit 3, while this may be the case in certain situations, in a typical situation, the display would be a part of the electronic circuit 3 and attached directly on the top PCB 5.

As seen in FIG. 1, a transmitter 6 for transmitting the quantity value is provided, here in the form of an antenna formed on a side PCB 7. Specific requirements to the antenna are known to the skilled person. In the context of embodiments of the present invention, any suitable antenna may be provided for wireless transmission of the quantity value. In an embodiment, the antenna may also be used for receiving signals, so that a two-way communication link to the consumption meter may be established. The antenna 6 is electrically connected to the electronic circuit 3 via the top PCB.

As seen in FIG. 2, a power supply 8 for powering the consumption meter is also present, here in the form of a battery attached to a side PCB 9. The battery 8 is electrically connected to the electronic circuit 3 via the top PCB. The top PCB, and the two side PCBs may collectively be referred to as the carrier PCBs.

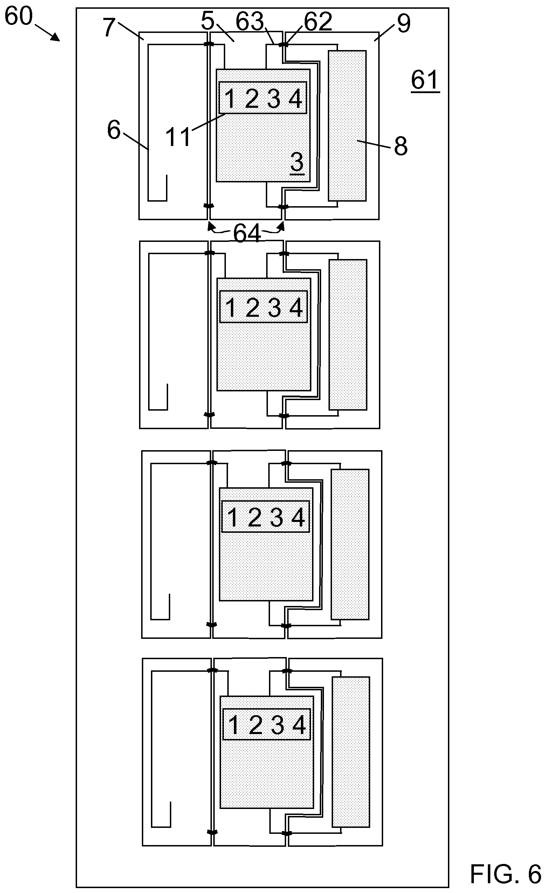

The display 11 is typically of a certain size, posing a given size on the top PCB 5. To keep the consumption meter compact, the PCB 9 carrying the battery 8, may be displaced inwards, so that the battery does not protrude beyond the edge of the top PCB 5. This aspect is further elaborated upon in connection with FIG. 6.

For a clear illustration of the elements encapsulated in the embedding unit, a casing and the embedding material is not illustrated in the FIGS. 1 and 2.

FIG. 3 illustrates the encapsulation of the measuring means 1-3, the electronic circuit 3, the transmitter 6, the power supply 8, the display 11, as well as any carrier PCBs in an embedding material 12. An embedded unit inside a casing 13 is thereby formed.

To ensure a sealing of the consumption meter, so that no unauthorized access is possible, sealing means may be provided. In an embodiment, the embedding material is adhesive, or a surface of the embedding material is provided with an adhesive material. By doing so the casing 13 may not be removed without breaking the casing. For example, the casing may be made in a plastic material. Most plastic materials clearly show any signs of an attempt to remove the casing. In addition to, or as an alternative to, an adhesion between the embedding unit and the casing, one or more anchors 16 may be provided. The anchors are typically formed together with the casing. The anchors may be of any suitable form. By providing anchors, the casing can not be removed without breaking the casing.

FIG. 4 illustrates in a schematic perspective view, a consumption meter in accordance with embodiments of the present invention. The consumption meter is in the form of a complete unit. The casing may be made in a plastic material. A number of suitable casing materials are not transparent, therefore in order to ensure visual connection to an encapsulated display 11, a transparent cover 15 may provided, or a cover comprising a transparent region 14 may be provided.

To provide a consumption meter having a user-interface for either monitoring or setting operation conditions etc., a number of elements may be provided in accordance with the present invention. Descriptions of exemplary embodiments are provided in the following in connection with FIG. 5.

FIG. 5A illustrates in a perspective view an exemplary embodiment wherein the electronic circuit 3 is provided with a number of components 51, 54, 58 enabling an interfacing to the meter.

In FIG. 5A, neither the casing nor the embedding material is illustrated. In the FIGS. 5B-D the components of FIG. 5A are illustrated in a cross-sectional schematic view, including the casing 52 and the embedding material 12.

FIG. 5B illustrates an exemplary embodiment where push-buttons 51 may be manually operated. In the Figure, the casing material, or an appropriate area of the casing, is in combination with the embedding material provided with a sufficient resiliency, so that a push-button 51 may be operated by pushing with a finger 53 on the appropriate area of the casing 52. Also the thickness of the embedding material in the area between the top of the push-buttons and the bottom of the casing may be adapted for enabling the operation of the push-buttons. A number of suitable embedding materials, including silicone, may be provided with a suitable resiliency. In an embodiment may the thickness between the top of the push-buttons and the casing be a few millimetres or even less.

FIG. 5C illustrates an exemplary embodiment where a plug socket 54 for electrical connection to the electronic unit 3 is provided. The plug socket may be provided so that one or more pins 56 from a corresponding plug are capable of cutting through the embedding material to be inserted into the socket 54. The socket may comprise through holes 57 plated on the inside with a conducting layer 500 for establishing electrical terminals for connection to the electronic circuit 3. The pin may be made as a plate pin which may easily cut through the embedding material. A suitable pin and plug assembly is disclosed in the Danish utility model application no. BR 2006 00215. In the Danish utility model application the embedding material is not present, however, the properties of the embedding material, e.g., in terms of softness and resiliency may be adapted so as to enable the applicability to the present plug and socket assembly.

FIG. 5D illustrates an exemplary embodiment where an optical communication unit 58 is operatively connected to the electronic unit 3. By placing a corresponding optical communication unit 59, an optical communication link 501 may be established. The embedding material may be sufficiently transparent for ensuring optical signals to propagate through the embedding material. The embedding material may comprises a dye, for tuning the optical properties of the embedding material.

FIG. 6 schematically illustrates an embodiment of a production step when fabricating the carrier PCBs 5, 7, 9 in accordance with the present invention. It is an advantage of embodiments of the present invention that the production of the carrier PCBs may be integrated with standard machines used for producing PCBs. The Figure illustrates a sheet 61 of PCB on which the carrier PCBs 5, 7, 9 are packed. The carrier PCBs are made up of three sections, the side PCB 7 carrying the antenna, the top PCB 5 carrying the display 11 and the side PCB 9 carrying the battery 8. Each section is separated from each other by a cut 64. Two adjacent PCBs are attached to each other by means of wire bondings 62 bridging the cuts. The wire bondings function as hinges so that the two adjacent PCBs in the consumption meter may be placed with an angle to each other. In order to displace the battery inwards under the display, cf. e.g. FIG. 2, the top PCB 5 is provided with a protrusion for supporting the width of the display, whereas the side PCB 9 carrying the battery is provided with a corresponding indentation. In addition to function as hinges, the wire bonds 62 may also function as a conductor path between adjacent PCBs, thereby enabling electrical contact between elements of adjacent PCBs, such as an electrical contact between the antenna 6 and the circuit 3 and the battery 8 and the circuit 3.

In an embodiment, the consumption meter is assembled in a process comprising a number of steps. The PCBs 5, 7, 9 are released from the PCB sheet 61, e.g. by means of stamping. The PCBs are mounted inside a first part of the casing. In a next step, the casing may be filled with the embedding material in a liquid form, and closed by the second, or remaining, part of the casing, so that an entire unit is provided. The liquid embedding material hardens, either before or after the casing has been closed off. In an alternative embodiment, the embedding material may in liquid form be introduced into an at least partly closed casing through a hole in the casing.

The embedding of the elements may be performed in low-pressure conditions to avoid air bubbles, or at least to diminish the number of air bubbles, or at least to limit the size of the air bubbles, in the embedding material. The embedding of the element may consequently be performed in a pressure of 1/5 atmosphere, 1/10 atmosphere or lower.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A consumption meter (10, 30) for measuring a quantity value corresponding to a consumed quantity, the consumption meter comprising:
- a flow passage to allow a medium to flow through the flow passage,
- a measuring means for measuring the quantity value corresponding to a consumed quantity of the medium flowing through the flow passage, including two ultrasonic transducers (1, 2) for generating and detecting ultrasonic signals;
- an integrated electronic circuit (3) implemented on a PCB, the integrated circuit being configured for determining the difference in arrival time of the ultrasonic signals and for converting and outputting measured quantities to the quantity value, and wherein the electronic circuit (3) comprises components for operating the consumption meter;
- an antenna (6) for transmitting the quantity value;
- a power supply (8) for powering the consumption meter; and
- a casing (13);
**characterized in that** an embedding material (12) encapsulates the measuring means, the electronic circuit (3), the antenna (6) and the power supply (8) to form one embedded unit inside the casing (13).

2. The consumption meter according to claim 1, wherein the embedding material is hydrophobic.

3. The consumption meter according to any of the preceding claims, wherein the embedding material is a water impermeable material.

4. The consumption meter according to any of the preceding claims, wherein the embedding material is at least partly transparent.

5. The consumption meter according to any of the claims 1 to 4, wherein the embedding material is a solid material.

6. The consumption meter according to any of the claims 1 to 4, wherein the embedding material is a viscous material.

7. The consumption meter according to any of the preceding claims, wherein the embedding material is a resilient material.

8. The consumption meter according to any of the preceding claims, wherein the embedding material comprises polymerized siloxanes.

9. The consumption meter according to any of the preceding claims, wherein the embedding material comprises a polymer material.

10. The consumption meter according to any of the preceding claims, wherein the embedding material is a non-conductive material.

11. The consumption meter according to any of the preceding claims, wherein the casing is provided with at least one anchor structure (16) that clutch into the embedded unit to impede removal of the casing.

12. The consumption meter according to any of the preceding claims, wherein the casing is provided in a plastic material.

13. The consumption meter according to any of the preceding claims, wherein the embedding material further encapsulates a display (11), the display being operatively connected to the electronic circuit.

## Patentansprüche

1. Verbrauchszähler (10, 30) zum Messen eines Mengenwerts, der einer verbrauchten Menge entspricht, wobei der Verbrauchszähler Folgendes umfasst:
- eine Durchgangspassage, die einem Medium gestattet, durch die Durchgangspassage zu strömen;
- eine Messeinrichtung zum Messen des Mengenwerts, der einer verbrauchten Menge des durch die Durchgangspassage strömenden Mediums entspricht, einschließlich zweier Ultraschallwandler (1, 2) zum Erzeugen und Erfassen von Ultraschallsignalen;
- eine integrierte elektronische Schaltung (3), die auf einer Leiterplatte implementiert ist, wobei die integrierte Schaltung zum Bestimmen der Differenz der Ankunftszeit der Ultraschallsignale und zum Umwandeln und Ausgeben der gemessenen Mengen an den Mengenwert konfiguriert ist, und wobei die elektronische Schaltung (3) Komponenten zum Betätigen des Verbrauchszählers umfasst;
- eine Antenne (6) zum Übertragen des Mengenwerts;
- eine Stromzufuhr (8) zum Versorgen des Verbrauchszählers mit Strom; und
- ein Gehäuse (13);
**dadurch gekennzeichnet, dass** ein einbettendes Material (12) die Messeinrichtung, die elektronische Schaltung (3), die Antenne (6) und die Stromzufuhr (8) ummantelt, um eine eingebettete Einheit im Inneren des Gehäuses (13) zu bilden.

2. Verbrauchszähler nach Anspruch 1, wobei das einbettende Material wasserabweisend ist.

3. Verbrauchszähler nach einem der vorhergehenden Ansprüche, wobei das einbettende Material ein wasserundurchlässiges Material ist.

4. Verbrauchszähler nach einem der vorhergehenden Ansprüche, wobei das einbettende Material zumindest teilweise transparent ist.

5. Verbrauchszähler nach einem der Ansprüche 1 bis 4, wobei das einbettende Material ein festes Material ist.

6. Verbrauchszähler nach einem der Ansprüche 1 bis 4, wobei das einbettende Material ein viskoses Material ist.

7. Verbrauchszähler nach einem der vorhergehenden Ansprüche, wobei das einbettende Material ein widerstandsfähiges Material ist.

8. Verbrauchszähler nach einem der vorhergehenden Ansprüche, wobei das einbettende Material polymerisierte Siloxane umfasst.

9. Verbrauchszähler nach einem der vorhergehenden Ansprüche, wobei das einbettende Material ein Polymermaterial umfasst.

10. Verbrauchszähler nach einem der vorhergehenden Ansprüche, wobei das einbettende Material ein nichtleitendes Material ist.

11. Verbrauchszähler nach einem der vorhergehenden Ansprüche, wobei das Gehäuse mit mindestens einer Verankerungsstruktur (16) versehen ist, die in die eingebettete Einheit einkoppelt, um das Entfernen des Gehäuses zu verhindern.

12. Verbrauchszähler nach einem der vorhergehenden Ansprüche, wobei das Gehäuse in einem Kunststoffmaterial vorgesehen ist.

13. Verbrauchszähler nach einem der vorhergehenden Ansprüche, wobei das einbettende Material ferner eine Anzeige (11) ummantelt, wobei die Anzeige betriebsfähig mit der elektronischen Schaltung verbunden ist.

## Revendications

1. Compteur de consommation (10, 30) pour mesurer une valeur de quantité correspondant à une quantité consommée, le compteur de consommation comprenant :
- un passage d'écoulement pour permettre à un fluide de s'écouler à travers le passage d'écoulement,
- un moyen de mesure pour mesurer la valeur de quantité correspondant à une quantité consommée du fluide s'écoulant à travers le passage d'écoulement, comprenant deux transducteurs ultrasonores (1, 2) pour générer et détecter des signaux ultrasonores ;
- un circuit électronique intégré (3) implémenté sur une carte de circuit imprimé, le circuit intégré étant configuré pour déterminer la différence de temps d'arrivée des signaux ultrasonores et pour convertir et faire sortir des quantités mesurées en tant que la valeur de quantité, et dans lequel le circuit électronique (3) comprend des composants pour actionner le compteur de consommation ;
- une antenne (6) pour transmettre la valeur de quantité ;
- un bloc d'alimentation (8) pour alimenter le compteur de consommation ; et
- un boîtier (13);
**caractérisé en ce qu'**un matériau d'encastrement (12) encapsule le moyen de mesure, le circuit électronique (3), l'antenne (6) et le bloc d'alimentation (8) pour former une unité encastrée à l'intérieur du boîtier (13).

2. Compteur de consommation selon la revendication 1, dans lequel le matériau d'encastrement est hydrophobe.

3. Compteur de consommation selon l'une quelconque des revendications précédentes, dans lequel le matériau d'encastrement est un matériau imperméable à l'eau.

4. Compteur de consommation selon l'une quelconque des revendications précédentes, dans lequel le matériau d'encastrement est au moins partiellement transparent.

5. Compteur de consommation selon l'une quelconque des revendications 1 à 4, dans lequel le matériau d'encastrement est un matériau ferme.

6. Compteur de consommation selon l'une quelconque des revendications 1 à 4, dans lequel le matériau d'encastrement est un matériau visqueux.

7. Compteur de consommation selon l'une quelconque des revendications précédentes, dans lequel le matériau d'encastrement est un matériau résilient.

8. Compteur de consommation selon l'une quelconque des revendications précédentes, dans lequel le matériau d'encastrement comprend des siloxanes polymérisés.

9. Compteur de consommation selon l'une quelconque des revendications précédentes, dans lequel le matériau d'encastrement comprend un matériau polymère.

10. Compteur de consommation selon l'une quelconque des revendications précédentes, dans lequel le matériau d'encastrement est un matériau non-conducteur.

11. Compteur de consommation selon l'une quelconque des revendications précédentes, dans lequel le boîtier est doté d'au moins une structure d'ancrage (16) qui se met en prise avec l'unité encastrée pour empêcher le retrait du boîtier.

12. Compteur de consommation selon l'une quelconque des revendications précédentes, dans lequel le boîtier est fourni en une matière plastique.

13. Compteur de consommation selon l'une quelconque des revendications précédentes, dans lequel le matériau d'encastrement encapsule en outre un afficheur (11), l'afficheur étant connecté fonctionnellement au circuit électronique.
